(19) Europäisches Patentamt / European Patent Office / Office européen des brevets

(11) **EP 1 857 420 A1**

(12) **EUROPEAN PATENT APPLICATION**
published in accordance with Art. 158(3) EPC

(43) Date of publication:
**21.11.2007 Bulletin 2007/47**

(21) Application number: **06713221.7**

(22) Date of filing: **07.02.2006**

(51) Int Cl.:
*C03B 5/167* (2006.01)     *C03B 5/225* (2006.01)

(86) International application number:
**PCT/JP2006/302078**

(87) International publication number:
**WO 2006/095523 (14.09.2006 Gazette 2006/37)**

(84) Designated Contracting States:
**BE DE FR GB**

(30) Priority: **08.03.2005 JP 2005063835**

(71) Applicant: **Asahi Glass Company, Limited**
**Chiyoda-ku, Tokyo 100-8405 (JP)**

(72) Inventors:
• **ABE, Satoru**
, **Kanagawa-ku, Yokohama-shi, Kanagawa, 2 (JP)**

• **HAMASHIMA, Kazuo**
, **Kanagawa-ku, Yokohama-shi, Kanagawa, 2 (JP)**

(74) Representative: **Müller-Boré & Partner**
**Patentanwälte**
**Grafinger Strasse 2**
**81671 München (DE)**

(54) **PLATINUM OR PLATINUM ALLOY STRUCTURE AND GLASS PURODUCTION APPARATUS MAKING USE OF THE SAME**

(57)     The present invention provides a platinum or a platinum alloy structure suitable as a conduit tube for molten glass, and a molten-glass-producing apparatus employing the structure as a conduit tube for molten glass.

A platinum or platinum alloy structure to be used under high-temperature environment, comprising a hollow tube body and a flange provided on the outer periphery of the hollow tube body so as to extend radially therefrom, wherein the flange is provided with a stress-strain-absorbing structure.

F i g. 1

EP 1 857 420 A1

## Description

TECHNICAL FIELD

The present invention relates to a platinum or platinum alloy structure to be used in a high-temperature environment. The structure comprises a hollow cylindrical tube and a flange provided on the outer periphery of the hollow cylindrical tube, which is suitable as a conduit tube for molten glass in a glass-producing apparatus. Further, the present invention relates to a glass-producing apparatus employing such a structure.

BACKGROUND ART

In a glass-producing apparatus, a hollow cylindrical tube made of platinum or a platinum alloy of e.g. platinum-gold or platinum-rhodium, is employed as a conduit tube in which high-temperature molten glass flows through. For example, in a vacuum degassing apparatus for molten glass described in Patent Document 1, platinum or platinum alloy hollow cylindrical tubes are employed for a vacuum degassing vessel for vacuum-degassing molten glass in the vessel, an uprising pipe for supplying molten glass from a melting vessel to the vacuum degassing vessel, and a downfalling pipe for discharging molten glass after the vacuum degassing treatment to subsequent treatment vessel. Further, other examples of conduit tube for letting molten glass flow through, includes a flow-out pipe provided for removing impurities from a glass-producing apparatus, a flow-out pipe for flowing out molten glass from a glass-producing apparatus to a mold for molding in a case of molding the molten glass into optical components such as lenses or prisms. In order to facilitate joining of these hollow cylindrical tubes or joining of such a hollow cylindrical tube with another constituent of vacuum degassing apparatus such as joining of the uprising pipe or the downfalling pipe with a vacuum housing in the vacuum degassing apparatus described in Patent Document 1, a flat disk-shaped flange 3' as shown in Fig. 6 is provided on the outer periphery of such hollow cylindrical tubes. Further, in a glass-producing apparatus, a conduit tube for letting molten glass flow through is heated to avoid generation of temperature difference between the conduit tube and molten glass flowing through the conduit tube. Heating of the conduit tube is achieved by heating it from the outside by a heat source such as a heater in some cases, but in a case of platinum or platinum alloy hollow cylindrical tube, heating of the hollow tube by providing an electrode on the hollow cylindrical tube and letting electric current pass through the hollow cylindrical tube, is widely carried out.

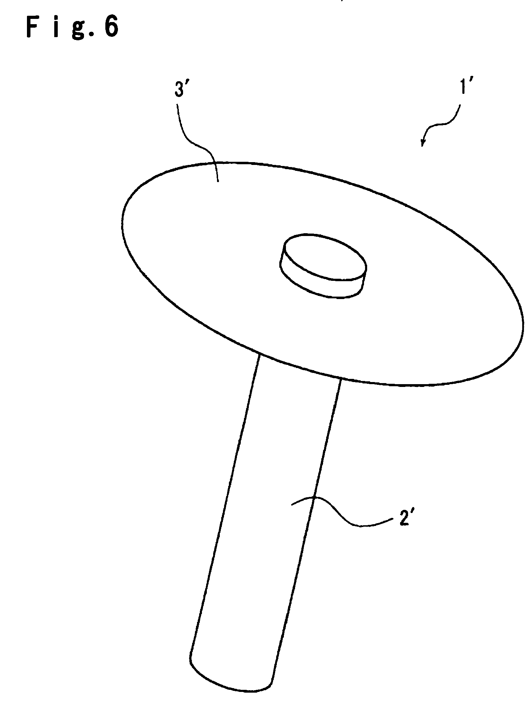

For the electrode for letting electric current pass through, a flat disk-shaped flange 3' as shown in Fig. 6 is employed to make electric current pass through the hollow cylindrical tube uniformly.

Patent Document 1: JP-A-11-139834

DISCLOSURE OF THE INVENTION

PROBLEMS TO BE SOLVED BY THE INVENTION

In these disk-shaped flanges, extremely large temperature difference is formed in some portions when they are used.

Namely, the temperature of the inner peripheral side of such a disk-shaped flange becomes as high as 1,100°C or higher since it is joined with a hollow cylindrical body in which molten glass passes through. On the other hand, outer peripheral side of the flange is joined with another constituent of a vacuum degassing apparatus such as a vacuum housing via a rubber gasket to maintain airtightness of the joined portion. For this reason, the joined portion is cooled to a temperature lower than the practical temperature (for example, 50 to 60°C) of the rubber gasket. In a flange used as an electrode for letting electric current pass through, the outer periphery of the flange is cooled to be joined with an external power source (usually via a lead wire). By this temperature difference, a thermal stress is applied to the flange. The inventors have discovered that the thermal stress due to temperature difference may cause a crack in the inner peripheral side of the flange.

When a flange is placed in a high-temperature environment, thermal stress is applied to the flange even there is no temperature difference. However, the problem to be solved in this specification is not this type of thermal stress but a thermal stress due to temperature difference, namely, a thermal stress applied to a flange due to a temperature difference in such a case where the flange is provided on a conduit tube for molten glass in a glass-producing apparatus and there is a temperature difference in the flange whose inner peripheral side and outer peripheral side are each fixed.

The temperature of a hollow cylindrical tube in which molten glass flows through, is not always constant but it may change in some cases. For example, in a case of changing glass to be supplied to glass-producing apparatus, the temperature of the hollow cylindrical tube is adjusted according to the composition of the glass. At this time, the temperature of the inner peripheral side of a flange joined with the hollow cylindrical tube is also changed. This temperature change also causes thermal stress in the flange. Further, when the hollow cylindrical tube is heated by letting electric current pass through, if the electric current passing through the hollow cylindrical tube is stopped for some reason, the temperature of the hollow cylindrical tube rapidly changes. Such a rapid temperature change influences inner peripheral side of the flange, whereby very high thermal stress is applied to the flange.

These thermal stresses and strains due to the thermal stresses, are concentrated on the inner peripheral side of the flange for the following reasons:

·The inner peripheral side of the flange is fixed to the outer periphery of the hollow cylindrical body, and the outer peripheral side of the flange is fixed to another constituent of the vacuum degassing apparatus such as a vacuum housing, and thus, thermal stress due to temperature difference is not released from the flange; and

·Mechanical strength of platinum or a platinum alloy constituting the flange decreases as the temperature increases, and accordingly, the inner peripheral side of the flange has lower strength than its outer peripheral side.

Concentration of thermal stress and strain caused by the thermal stress to the inner peripheral side having low strength, causes a crack in the inner peripheral side of the flange. If a crack is formed on the flange, it becomes impossible to maintain a desired vacuum state in the vacuum housing. Further, in a case of electrode for letting electric current pass through, a crack prevents electric current to the electrode. If the electric current to the electrode for letting electric current pass through, is stopped, passing of electricity through the hollow cylindrical tube stops and the temperature of the hollow cylindrical tube rapidly changes. At this time, very high thermal stress is applied to the flange as described above.

To solve the above-mentioned problems of prior arts, it is an object of the present invention to provide a constituent of a glass-producing apparatus, specifically, a platinum or platinum alloy structure suitable as a conduit tube for molten glass. The structure of the present invention is configured to prevent forming of cracks of a flange caused by thermal stress due to temperature difference in the flange when the flange is used in a high-temperature environment.

Further, it is an object of the present invention to provide a molten-glass-producing apparatus employing such a structure as a conduit tube for molten glass.

MEANS FOR SOLVING THE PROBLEMS

In order to achieve the above objects, the present invention provides a platinum or platinum alloy structure (hereinafter referred to as "structure of the present invention") to be used under high-temperature environment comprising a hollow tube body and a flange provided on the outer periphery of the hollow tube body so as to extend radially therefrom, wherein the flange is provided with a stress-strain-absorbing structure.

In the structure of the present invention, it is preferred that the flange has a disk shape and the stress-strain-absorbing structure is a flexible portion formed so as to be concentric with the flange.

In the structure of the present invention, it is preferred that the stress-strain-absorbing structure is provided at a portion where the temperature of the structure when it is used becomes at most 1/2 of the melting point of the material constituting the flange.

In the structure of the present invention, it is preferred that the stress-strain-absorbing structure is provided at a portion where the temperature of the structure when it is used becomes at least 1/10 of the melting point of the material constituting the flange.

In the structure of the present invention, it is preferred that the stress-strain-absorbing structure is provided at a portion where the following formula is satisfied:

$$3/10 \leq X/Y \leq 9/10$$

wherein:

X is the distance from the outer periphery of the hollow tube body to the stress-strain-absorbing structure, and

Y is the distance from the outer periphery of the hollow tube body to the outer periphery of the flange.

It is preferred that the thermal stress applied to the stress-strain-absorbing structure when it is used, is less than 70% of the tensile strength of the material constituting the flange.

In the structure of the present invention, the outer peripheral portion of the flange may be made of a metal other than platinum or platinum alloy.

Further, the present invention provides a glass-producing apparatus employing the structure of the present invention as a conduit tube for molten glass.

Further, the present invention provides a vacuum degassing apparatus employing the structure of the present invention as a conduit tube for molten glass.

In the glass-producing apparatus or the vacuum degassing apparatus of the present invention, it is preferred that the flange forms an electrode for letting electricity pass through the platinum or platinum alloy structure to heat the structure.

EFFECTS OF THE INVENTION

The structure of the present invention is configured to prevent forming of a crack in the flange caused by thermal stress due to temperature difference in the flange when the flange is used in a high-temperature environment. The structure of the present invention is suitable as a structure to be used in a high-temperature environment, particularly as a structure in which a temperature difference is formed in its flange, such as a conduit tube for molten glass in a glass-producing apparatus.

A glass-producing apparatus of the present invention can produce high-quality glass since forming of cracks in flanges is prevented when the apparatus is used. For example, when a crack is formed in a flange used at a joined portion with a vacuum housing in a vacuum degassing apparatus, it becomes impossible to maintain a desired vacuum state in the vacuum housing, and thus, it becomes impossible to remove bubbles in a molten glass to a desired level. However, in the vacuum degassing apparatus of the present invention, since no crack is formed in a flange, it is possible to maintain a sufficient vacuum state in the vacuum housing to remove bubbles in a molten glass to a desired level.

Meanwhile, when a crack is formed in a flange to be used as an electrode for letting electricity pass through a conduit tube to heat the tube, it becomes impossible to heat the conduit tube, which causes a temperature difference between molten glass and the conduit tube to make it difficult to produce a glass. Further, when the heating of the conduit tube is prevented, rapid temperature change occurs, which may cause thermal stress to form new cracks.

These problems are solved in the glass-producing apparatus of the present invention.

BRIEF EXPLANATION OF THE DRAWINGS

Fig. 1: Fig. 1 is a perspective view showing a first embodiment of the structure of the present invention.
Fig. 2: Fig. 2 is a partial cross-sectional view of the structure 1 of Fig. 1 showing a cross section along a long axis of a hollow cylindrical body, which shows a flange 3 in the left side of Fig. 1 and a part of the hollow cylindrical body 2 joined with the flange 3.
Fig. 3: Figs. 3(a) to 3(g) are views similar to Fig. 2, which show other construction examples of stress-strain-absorbing structure.
Fig. 4: Fig. 4 is a perspective view showing a construction of the Example of the present invention.
Fig. 5: Fig. 5 is a partial cross-sectional view similar to Fig. 2, which shows the structure of Fig. 4.
Fig. 6: Fig. 6 is a perspective view showing the construction of Comparative Example.
Fig. 7: Fig. 7 is a graph showing thermal stress at various portions of the flanges in the structures of Example of the present invention and Comparative Example.
Fig. 8: Fig. 8 is a graph showing thermal stress at various portions of the flanges in the structures of Example of the present invention and Comparative Example, wherein the thermal stress is shown as the ratio based on the tensile strength of the material constituting the portions.
Fig. 9: Fig. 9 is a graph showing strain of various portions of the flanges in the structures of Example of the present invention and Comparative Example. Here, the strain of various portions of the flanges is shown as a relative value provided that the strain at the outer peripheral portion of the flange is 1.

EXPLANATION OF NUMERALS

1, 1': Structure
2, 2': Hollow cylindrical body
3, 3': Flange
4: Stress-strain-absorbing structure

BEST MODE FOR CARRYING OUT THE INVENTION

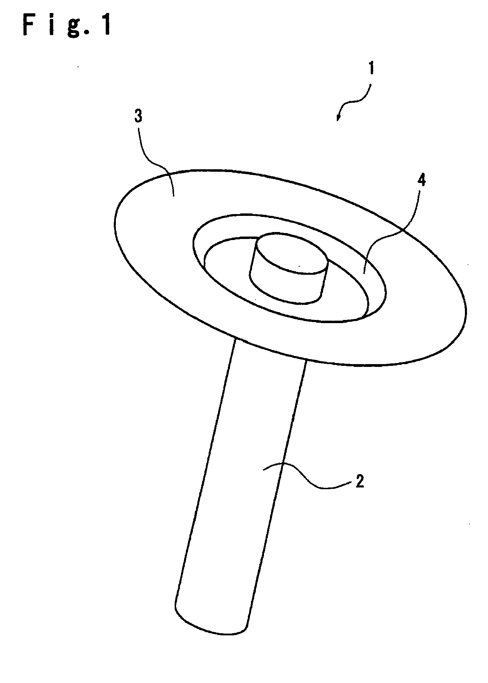

The present invention is described below with reference to drawings. Fig. 1 is a perspective view showing a first embodiment of the structure of the present invention.

As shown in Fig. 1, the structure 1 of the present invention is constituted by a hollow cylindrical body 2 and a flange 3 provided at the outer periphery of the hollow cylindrical body 2. Flange 3 extends radially from the outer periphery of the hollow cylindrical body 2, and has a disk shape. The hollow cylindrical body 2 and the flange 3 are made of platinum or a platinum alloy such as platinum-gold or platinum-rhodium. In the structure 1, the hollow cylindrical body 2 and the flange 3 are separate members. Namely, the flange 3 is connected to the outer periphery of the hollow cylindrical body 2. To connect flange 3 to the outer periphery of the hollow cylindrical body 2, the flange 3 may be welded to the outer periphery of the hollow cylindrical body 2. Here, the flange 3 may be directly welded to the outer periphery of the hollow cylindrical body 2, or the flange 3 may be welded to another member such as a ring-shaped member made of platinum or a platinum alloy disposed between these members.

In the construction 1 shown in Fig. 1, the flange 3 is provided with a stress-strain-absorbing structure 4. In the structure of the present invention, the stress-strain-absorbing structure is a structure for concentrating therein a thermal stress and a strain caused by the thermal stress when the thermal stress is caused by temperature difference in the flange 3 used in a high-temperature environment.

In the structure 1 of the present invention, since it is possible to concentrate thermal stress and strain caused by the thermal stress in the stress-strain-absorbing structure 4, concentration of the thermal stress and the consequent strain is prevented in other portions of the flange 3, particularly in the inner peripheral side of the flange 3 where the temperature is high when the structure 1 is used. By this construction, a risk that a crack is formed in the flange 3 by thermal stress caused by temperature difference when the flange is used in a high-temperature environment, is cleared.

The shape of the stress-strain-absorbing structure 4 is not particularly limited so long as the structure is a structure capable of concentrating thermal stress and consequent strain in the structure and capable of absorbing them. However, in order to efficiently absorb thermal stress formed in the disk-shaped flange 3 and consequent strain, the stress-strain-absorbing structure 4 is preferably provided so as to form a concentric circle with the flange 3.

When a stress is applied to a structural member under the assumption that mechanical characteristics of materials such as Young's modulus and tensile strength are uniform, the stress (and strain caused by the stress) is concentrated in a portion where e.g. cross sectional shape changes. Accordingly, a preferred embodiment of the stress-strain-absorbing structure 4 is a deformed portion forming a concentric circle with the flange 3.

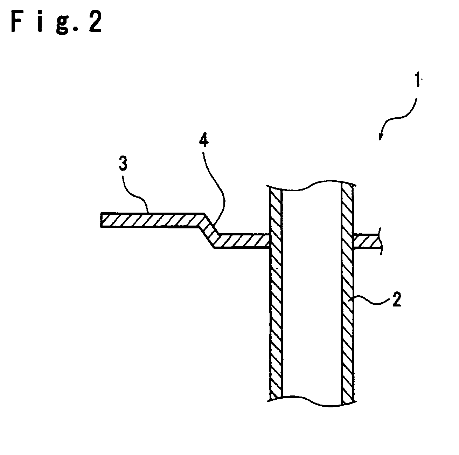

In the structure 1 shown in Fig. 1, the stress-strain-absorbing structure (deformed portion, this definition is applied hereinafter) 4 forms a concentric circle with the flange 3. Fig. 2 is a partial cross-sectional view of the structure 1 shown in Fig. 1, showing cross section along a long axis of the hollow cylindrical body 2, which shows the joined portion of the flange 3 with the hollow cylindrical body 2. As shown in Fig. 2, the stress-strain-absorbing structure 4 forms a step of flange 3 having a step shape. Forming of the stress-strain-absorbing structure 4 as a step of the flange 3, is preferred since such a construction does not affect the function of flange 3 and the stress-strain-absorbing structure 4 itself has sufficient mechanical strength.

The stress-strain-absorbing structure (deformed portion) 4 needs to have sufficient mechanical strength since thermal stress and consequent strain are concentrated in the portion. The mechanical strength of platinum or a platinum alloy constituting the flange 3 decreases as the temperature increases. Accordingly, the stress-strain-absorbing structure (deformed portion) 4 is preferably provided in a portion of flange 3 where the temperature does not become too high when the structure 1 is used.

In a case where the structure of the present invention is used as an uprising pipe or a downfalling pipe of a vacuum degassing apparatus, the temperature of the inner peripheral side of the flange becomes as high as 1,100°C or higher since the portion is joined to a hollow cylindrical body in which molten glass flow through. On the other hand, the outer peripheral side of the flange is cooled to the practical temperature of a rubber gasket or lower (for example, 50 to 60°C) since the portion is joined with another constituent of the vacuum degassing apparatus via a rubber gasket. Namely, when the structure of the present invention is used, the temperature is not uniform in the flange 3. The stress-strain-absorbing structure 4 is preferably provided in a portion of the flange 3 where the temperature does not become too high when the structure 1 is used, among portions of the flange 3 having different temperatures when the structure 1 is used, considering the relation to the mechanical strength of platinum or platinum alloy.

The stress-strain-absorbing structure 4 is provided in a portion where the temperature becomes at most 1/2 of the melting point of a material constituting the flange 3 when the structure 1 is used. In this case, entire stress-strain-absorbing structure 4 is preferably provided in a portion where the temperature becomes at most 1/2 of the melting point of the material constituting the flange 3 when the structure 1 is used.

When the stress-strain-absorbing structure 4 is provided in a portion where the temperature becomes at most 1/2 of the melting point of the material constituting the flange 3 when the structure 1 is used, the stress-strain-absorbing structure (deformed portion) 4 has sufficient mechanical strength against thermal stress and consequent strain applied to the portion. The stress-strain-absorbing structure 4 is preferably provided in a portion where the temperature becomes at most 9/20 of the melting point of the material constituting the flange 3 when the structure 1 is used.

Here, in a case of a flange having no stress-strain-absorbing structure, thermal stress and consequent strain tend to be concentrated in the inner peripheral side of the flange where the temperature is high when the structure 1 is used. For this reason, when the stress-strain-absorbing structure 4 is provided in a portion where the temperature is extremely low when the structure 1 is used, it may be impossible to sufficiently concentrate the thermal stress and the consequent strain in the stress-strain-absorbing structure 4.

In the structure 1 of the present invention, the stress-strain-absorbing structure 4 is preferably provided in a portion where the temperature becomes at least 1/10 of the melting point of the material constituting the flange 3 when the structure 1 is used. In a case where the stress-strain-absorbing structure 4 is provided in a portion where the temperature becomes at least 1/10 of the melting point of the material constituting the flange 3 when the structure 1 is used, it is possible to sufficiently concentrate the thermal stress and the consequent strain in the stress-strain-absorbing structure 4. Accordingly, there is no risk that the thermal stress and the consequent strain are concentrated in other portions of the flange 3, particularly in the inner peripheral side of the flange 3. The stress-strain-absorbing structure 4 is preferably provided in a portion where the temperature becomes at least 1/5 of the melting point of the material constituting the flange 3 when the structure 1 is used.

In the structure 1 of the present invention, the stress-strain-absorbing structure 4 is preferably provided in a portion satisfying the following formula:

$$3/10 \leq X/Y \leq 9/10$$

wherein
X: the distance from the outer periphery of the hollow cylindrical tube 2 to the stress-strain-absorbing structure 4, and
Y: the distance from the outer periphery of the hollow cylindrical tube 2 to the outer periphery of the flange 3.

Here, in a case where the distance from the outer periphery of the hollow cylindrical tube 2 to the stress-strain-absorbing structure 4 has a range as in the structure 1 shown in Fig. 1 and Fig. 2, X is defined as the medium value of the range.

When the stress-strain-absorbing structure 4 is provided in the portion satisfying the above formula, the portion provided with the stress-strain-absorbing structure 4 has sufficient mechanical strength against thermal stress and consequent strain. Further, it is possible to sufficiently concentrate and absorb the thermal stress and the consequent strain in the stress-strain-absorbing structure 4. Accordingly, there is no risk that the thermal stress and the consequent strain are concentrated in other portions of the flange 3, particularly in the inner peripheral side of the flange 3.

The stress-strain-absorbing structure 4 needs to have sufficient mechanical strength against thermal stress and consequent strain. For this reason, the stress-strain-absorbing structure 4 is preferably provided so that thermal stress applied to the portion becomes less than 70%, more preferably less than 65%, of the tensile strength of the material constituting the flange when the structure 1 is used.

When the stress-strain-absorbing structure 4 satisfies the above relation, the stress-strain-absorbing structure 4 has sufficient tensile strength against the thermal stress and the consequent strain.

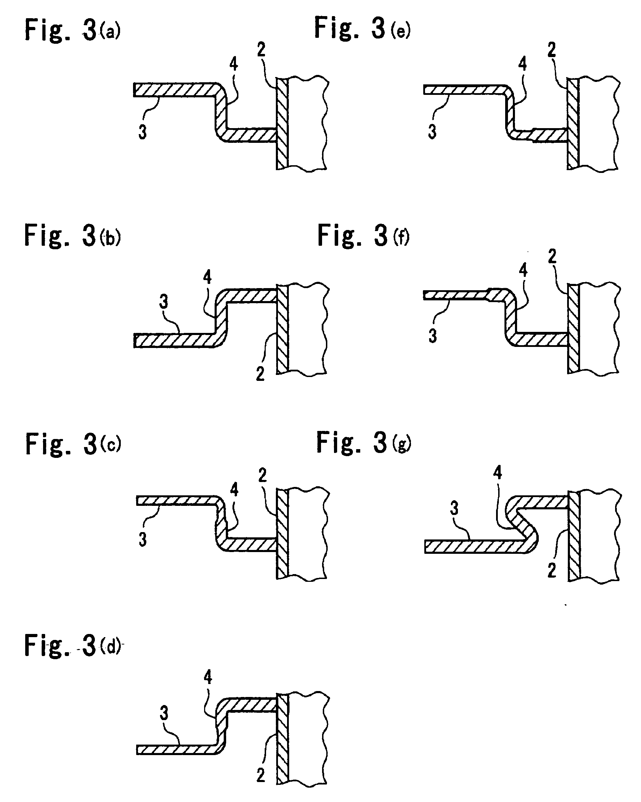

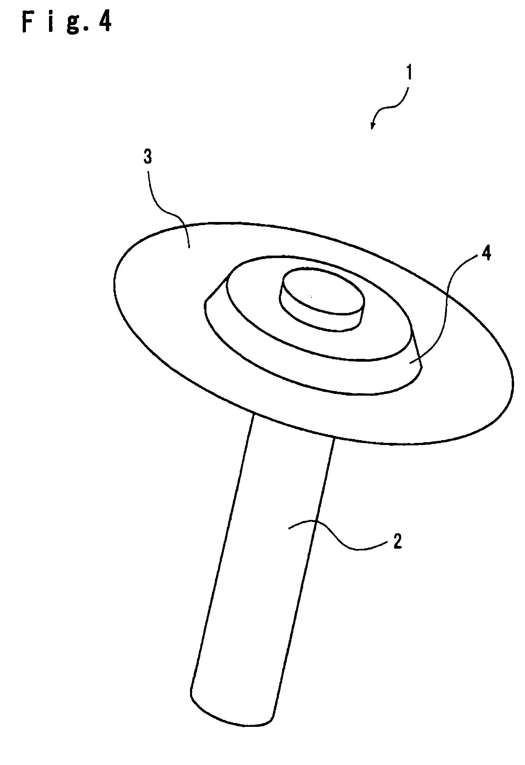

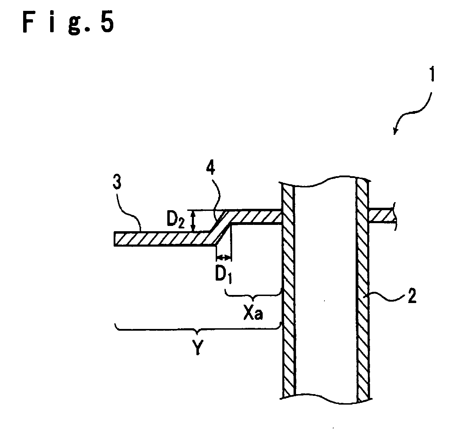

It is sufficient that the shape or the position of the stress-strain-absorbing structure 4 or the material or the thickness of the flange 3 is appropriately selected as the case requires so that the stress-strain-absorbing structure 4 satisfies the above relations. For example, when the stress-strain-absorbing structure 4 is a step of a step-shaped flange 3 as shown in Figs. 1 and 2, e.g. the height, the width or the bending angle of the step, or the distance from the hollow cylindrical body 2 to the step, may be appropriately selected. Other construction examples of the stress-strain-absorbing structure 4 are shown in Figs. 3(a) to 3(g), 4 and 5. Here, Fig. 5 is a partial cross-sectional view similar to Fig. 2 of the structure shown in Fig. 4. In the structure of Fig. 3(a), the shape of the stress-strain-absorbing structure 4 is different from that of the structure 1 of Fig. 2. Namely, in the structure 1 of Fig. 2, the step of the flange 3 forming the stress-strain-absorbing structure 4 inclines in a diagonal direction, while in the structure of Fig. 3(a), the step of the flange forming the stress-strain-absorbing structure 4 is substantially perpendicular. The shape of the structure of Fig. 3(b) is similar to that of the structure of Fig. 3(a).

However, the positional relationship between the inner peripheral side and the outer peripheral side of the flange 3 is opposite in the vertical direction. The structures of Figs. 3(c) and 3(d) have similar shapes to those of the constructions of Figs. 3(a) and 3(b) respectively. Here, in each of the structures of Figs. 3(c) and 3(d), the wall thickness of the flange 3 changes in the middle of the stress-strain-absorbing structure 4. The shapes of the structures of Figs. 3(e) and 3(f) are similar to the shape of the structure of Fig. 3(a). Here, in the structure of Fig. 3(e), the wall thickness of the flange 3 changes in a portion more inner peripheral side of the stress-strain-absorbing structure 4. Further, in the structure of Fig. 3(f), the wall thickness of the flange 3 changes in a portion more outer peripheral side of the stress-strain-absorbing structure 4. In the structure of Fig. 3(g), the cross-sectional shape of the step of the flange 3 forming the stress-strain-absorbing structure 4, is an S shape. The structures of Fig. 4 and Fig. 5 have similar shapes to those of the structures 1 of Fig. 1 and Fig. 2. However, the positional relationship between the inner peripheral side and the outer peripheral side of the flange 3 are opposite in the vertical direction.

Here, when the stress-strain-absorbing structure is a step of a step-shaped flange, the dimension of the step is preferably in the following range in the example of the structure 1 shown in Figs. 4 and 5:

$D_1$: 20 to 200 mm, more preferably 30 to 150 mm, and
$D_2$: 20 to 100 mm, more preferably 30 to 80 mm.

Here, $D_1$ means the dimension of the step in a direction parallel with the flange, and $D_2$ means the dimension of the step in the direction perpendicular to the flange.

Further, in the construction 1 shown in Figs. 1 and 2, the shape of the flange 3 is a disk shape, but in the structure of the present invention, the flange may have another shape such as an ellipse, a rectangle, a hexagon or an octagon. In each of these cases, the distance Y from the outer periphery of the hollow cylindrical tube to the outer periphery of the flange, is defined as the distance at the portion where the distance becomes minimum.

In the structure of the present invention, the dimensions of the hollow cylindrical tube and the flange are not particularly limited. For example, in the structure 1 shown in Figs. 4 and 5, the dimensions of the portions of the structure 1 are preferably within the following respective ranges.

Hollow cylindrical body 2

Inner diameter: 50 to 800 mm, more preferably 100 to 600 mm

Length: 200 to 3,000 mm, more preferably 400 to 1,500 mm

Wall thickness: 0.4 to 5 mm, more preferably 0.8 to 4 mm

Flange 3

Y: 100 to 600 mm, more preferably 200 to 400 mm

Wall thickness: 0.5 to 8 mm, more preferably 1 to 5 mm

As apparent from the above description, the structure of the present invention is suitable for applications in which very large temperature difference is formed between the inner peripheral side and the outer peripheral side of a flange. For example, the structure of the present invention is suitable for an application in which the temperatures of the inner peripheral side and the outer peripheral side of a flange become those the following respective ranges when the structure is used:

Inner peripheral side of flange: 1,100 to 1,500°C, preferably 1,200 to 1,500°C, and

Outer peripheral side of flange: 30 to 400°C, preferably 40 to 400°C, more preferably 40 to 200°C.

Accordingly, it is preferred that the temperature difference between the inner peripheral side and the outer peripheral side of the flange is about from 1,100 to 1,450°C, since the effect of the structure of the present invention is more suitably exhibited on such a condition.

Accordingly, an example of suitable application of the structure of the present invention may be a conduit tube for molten glass in a glass-producing apparatus. More specifically, it may, for example, be a vacuum degassing vessel, an uprising pipe and a downfalling pipe of a vacuum degassing apparatus, a flow out pipe provided for removing impurities from a glass-producing apparatus, and a flow out pipe for flowing molten glass out into a molding mold from a glass-producing apparatus.

Particularly, the structure of the present invention is preferably employed for an uprising pipe and/or downfalling pipe of a vacuum degassing apparatus. Such an uprising pipe or a downfalling pipe has a structure for sucking or flowing out molten glass, and is present in a border between the inside of the apparatus being in a vacuum state and an external atmosphere, whereby a temperature difference is inevitably formed in these pipes, and the effect of the present invention can be more significantly exhibited.

As evident from the above, since the temperature of the outer peripheral side of the flange is relatively low when the structure of the present invention is used in most cases, the material constituting the outer peripheral side of the flange is not necessarily platinum or a platinum alloy. In the structure of the present invention, a platinum or a platinum alloy flange may have a portion constituted by a metallic material other than platinum or a platinum alloy in its outer edge portion.

As such a metallic material, molybden, tungsten, nickel, palladium, copper or their alloys are mentioned.

Here, the portion constituted by these metallic materials is joined with the outer peripheral side of a platinum or platinum alloy flange by fixing means such as welding, bolts or screws.

In a glass-producing apparatus of the present invention, the structure of the present invention is employed as a conduit tube for molten glass in which high-temperature molten glass flows through. Especially, the structure is suitably employed in portions of the apparatus where a temperature difference is formed in a flange when the glass-producing apparatus is used. As specific examples of such portions, a vacuum degassing vessel, an uprising pipe and a downfalling pipe of a vacuum degassing apparatus are mentioned. In an uprising pipe and a downfalling pipe, a flange forms a joining portion with a housing. In the joining portion, a rubber gasket is used to achieve airtight joining. Accordingly, very large temperature difference is present between the outer peripheral side of the flange cooled to a temperature below heat-resistant temperature of the rubber gasket (for example, 50 to 60°C) and the inner peripheral side of the flange joined with a conduit tube for molten glass. Specifically, when the vacuum degassing apparatus is used, the temperature in the inner peripheral side of the flange is from 1,100 to 1,500°C, and the temperature in the outer peripheral side of the flange is from 40 to 200°C.

Further, in a glass-producing apparatus, the structure of the present invention is employed as a conduit tube for molten glass which is heated by letting electricity pass through the conduit tube. In this case, the flange of the structure can be used as an electrode for the heating. The outer peripheral side of the flange is cooled to be connected with an external power source. Accordingly, very large temperature difference is formed between the inner peripheral side of the flange joined with a conduit tube for molten glass and the outer peripheral side of the flange. When the molten glass-producing apparatus is used, the temperature in the inner peripheral side of the flange is from 1,100 to 1,500°C, and the temperature in the outer peripheral side of the flange is from 40 to 200°C.

In these flanges, there is a risk that a crack is formed by thermal stress caused by the temperature difference. Further, also when the temperature of the glass-producing apparatus is changed, thermal stress is applied to these flanges. When such a thermal stress caused by the temperature change is applied, the possibility of forming a crack becomes higher than the case where only a stress caused by the temperature difference is applied.

In the glass-producing apparatus of the present invention, employment of the structure of the present invention having a stress-strain-absorbing structure clears the risk of forming a crack in a flange caused by the thermal stress. When a crack is formed in a flange used in a joining portion with a vacuum housing of a vacuum degassing apparatus, it becomes impossible to maintain a desired vacuum state inside the vacuum housing, and to remove bubbles in molten glass to a desired level. Meanwhile, when a crack is formed in a flange used as an electrode for letting electricity pass through a conduit tube to heat the conduit tube, it becomes impossible to heat the conduit tube. Accordingly, a temperature difference is formed between molten glass and the conduit tube, and it becomes difficult to produce a glass. Further, when the heating of the conduit tube becomes impossible, rapid temperature change occurs, and there occurs a risk that a new crack is formed by a thermal stress caused by the temperature change. In the glass-producing apparatus of the present invention, these problems are solved.

The structure of the present invention is suitably employed for a vacuum degassing apparatus for producing a glass. In a vacuum degassing apparatus, since it is necessary to maintain vacuum state in the apparatus while high-temperature molten glass is flown in a hollow cylindrical tube, the edge of a flange needs to be joined with a cooled portion. Accordingly, in the vacuum degassing apparatus, the hollow cylindrical tube is used in a special environment in which very large temperature difference is present between the hollow cylindrical tube and the flange.

EXAMPLES

The present invention is further described with reference to Examples.

EXAMPLE OF THE PRESENT INVENTION

In this example, a structure made of a platinum-rhodium alloy (90 mass% of platinum and 10 mass% of rhodium) shown in Figs. 4 and 5 was produced. Here, a flange 3 is welded to the outer periphery of a hollow cylindrical body 2. The flange 3 is a circular flange, in which a stress-strain-absorbing structure 4 is formed to have a concentric circle with the flange. Dimensions of portions of the structure 1 are as follows.

Hollow cylindrical body 2

Inner diameter: 405 mm
Length: 650 mm
Wall thickness: 2.8 mm

Flange 3

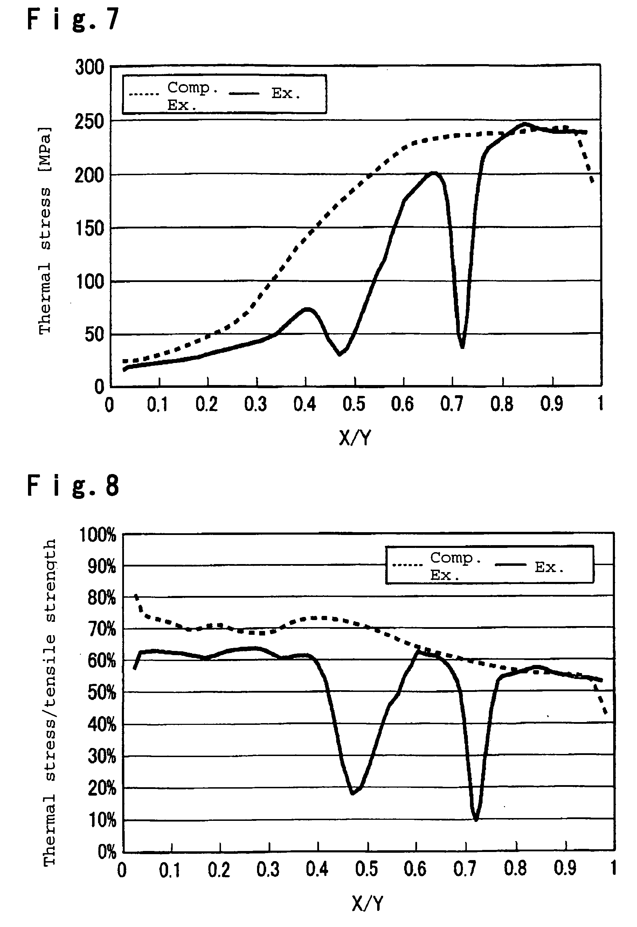

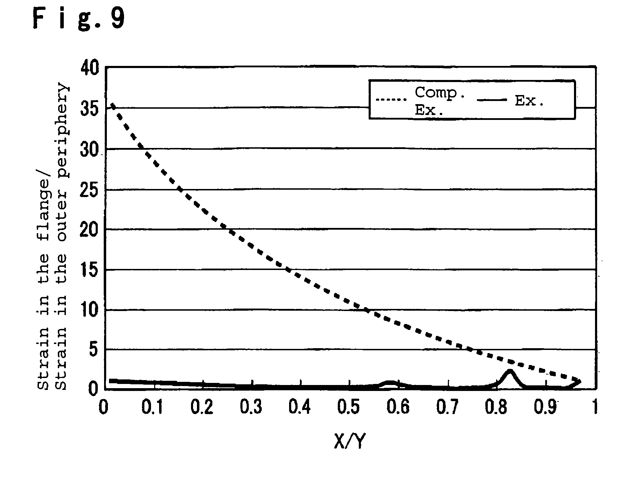

X: 122.5 mm
Y: 217.5 mm
(X/Y = 0.563)
Wall thickness: 1.6 mm
$D_1$: 65 mm
$D_2$: 40 mm
Here, in the structure 1 shown in Figs. 4 and 5, the stress-strain-absorbing structure 4 is formed in a portion where the temperature becomes 45% of the melting point of the platinum-rhodium alloy when the structure is used.
The outer peripheries of the hollow cylindrical tube 2 and the flange 3 are each mechanically fixed. While the outer periphery of the flange 3 was maintained at a room temperature (40°C), the hollow cylindrical body 2 was heated to 1,400°C. Here, in this state, thermal stresses applied to various portions of the flange 3 and strains formed in various portions of the flange 3 caused by the thermal stress, were calculated by a three-dimensional elastic and plastic analysis. The results are shown in Figs. 7 to 9. Fig. 7 is a graph showing thermal stresses applied to various portions of the flange 3. Fig. 8 shows thermal stresses applied to various portions of the flange 3 in its ratio to the tensile strength of the material constituting the portions. Fig. 9 is a graph showing strains formed at various portions of the flange 3. In Fig. 9, the strains formed at various portions of the flange 3 are shown in a ratio based on a strain formed at the outer periphery of the flange 3 that is assumed to be 1. Here, in Figs. 7 to 9, X represents the distance from the outer periphery of the hollow cylindrical tube 2 to each portion of the flange 3, and Y represents the distance from the outer periphery of the hollow cylindrical tube 2 to the outer periphery of the flange 3.

COMPARATIVE EXAMPLE

As a comparative example, a platinum structure shown in Fig. 6 was produced. In the structure 1' shown in Fig. 6, a flange 3' has a flat disk shape having no stress-strain-absorbing structure. Dimensions of portions of the structure 1' are as follows.

Hollow cylindrical body 2'

Inner diameter: 405 mm
Length: 650 mm
Wall thickness: 3.0 mm

Flange 3'

Y: 217.5 mm
Wall thickness: 3.0 mm
The structure 1' of Comparative Example is also heated under the same conditions as those of the Example of the present invention, and thermal stresses applied to various portions of the flange 3' and strains formed at various portions of the flange 3' caused by the thermal stress, were calculated by a three-dimensional elastic and plastic analysis. The results are shown in Figs. 7 to 9.
As evident from Figs. 7 and 9, in the structure 1' of Comparative Example, thermal stress and consequent strain are concentrated in the inner peripheral side of the flange 3', while in the structure 1 of Example of the present invention, the problem is solved. Namely, in the structure 1 of Comparative Example, thermal stress and strain caused by the thermal stress are concentrated not in the inner peripheral side of the flange 3 but in the outer peripheral side than the stress-strain-absorbing structure 4. Further, as evident from Fig. 8, in the structure 1 of Example of the present invention, tensile strength of the material constituting the flange 3 has sufficient margin to the thermal stress applied to various portions of the flange 3.
Here, in the flange 3' of Comparative Example, forming of a crack in the inner peripheral side was observed.

INDUSTRIAL APPLICABILITY.

The platinum or platinum alloy structure of the present invention comprises a hollow cylindrical tube and a flange provided on the outer periphery of the hollow cylindrical tube, and a stress-strain-absorbing device is provided in the flange portion to prevent forming of a crack, whereby the structure is suitable as a conduit tube for molten glass in a glass-producing apparatus.

The entire disclosure of Japanese Patent Application No. 2005-63835 filed on March 8, 2005 including specification, claims, drawings and summary is incorporated herein by reference in its entirety.

**Claims**

1. A platinum or platinum alloy structure to be used under high-temperature environment, comprising a hollow tube body and a flange provided on the outer periphery of the hollow tube body so as to extend radially therefrom, wherein the flange is provided with a stress-strain-absorbing structure.

2. The platinum or platinum alloy structure according to Claim 1, wherein the flange has a disk shape and the stress-strain-absorbing structure is a flexible portion formed so as to be concentric with the flange.

3. The platinum or platinum apply structure according to Claim 1 or 2, wherein the stress-strain-absorbing structure is provided at a portion where the temperature of the structure when it is used becomes at most 1/2 of the melting point of the material constituting the flange.

4. The platinum or platinum alloy structure according to Claim 3, wherein the stress-strain-absorbing structure is provided at a portion where the temperature of the structure when it is used becomes at least 1/10 of the melting point of the material constituting the flange.

5. The platinum or platinum alloy structure according to any one of Claims 1 to 4, wherein the stress-strain-absorbing structure is provided at a portion where the following formula is satisfied:

$$3/10 \leq X/Y \leq 9/10$$

wherein:

X is the distance from the outer periphery of the hollow tube body to the stress-strain-absorbing structure, and

Y is the distance from the outer periphery of the hollow tube body to the outer periphery of the flange.

6. The platinum or platinum alloy structure according to any one of Claims 1 to 5, wherein the thermal stress applied to the stress-strain-absorbing structure when it is used, is less than 70% of the tensile strength of the material constituting the flange.

7. The platinum or platinum alloy structure according to any one of Claims 1 to 6, wherein the stress-strain-absorbing structure comprises a step of the flange inclining in a diagonal direction.

8. The platinum or platinum alloy structure according to Claim 7, wherein the dimension of the step in the direction parallel with the flange is from 20 to 200 mm and the dimension of the step in the direction perpendicular to the flange is from 20 to 100 mm.

9. The platinum or platinum alloy structure according to any of the Claims 1 to 8, wherein the temperature in the inner peripheral side of the flange is from 1,100 to 1,500°C and the temperature in the outer peripheral side of the flange is from 40 to 400°C when the structure is used.

10. The platinum or platinum alloy structure according to any one of Claims 1 to 9, wherein the inner diameter of the hollow tube body is from 50 to 800 mm.

11. The platinum or platinum alloy structure according to any one of Claims 1 to 10, wherein the length of the hollow tube body is from 200 to 3,000 mm.

12. The platinum or platinum alloy structure according to any one of Claims 1 to 11, which is to be used for a vacuum degassing apparatus for producing glass.

13. The platinum or platinum alloy structure according to any one of Claims 1 to 12, wherein the outer peripheral portion of the flange is made of a metal other than platinum or platinum alloy.

14. A glass-producing apparatus employing the platinum or platinum alloy structure as defined in any one of Claims 1 to 13 as a conduit tube for molten glass.

15. A vacuum degassing apparatus employing the platinum or platinum alloy structure as defined in any one of Claims 1 to 13 as a conduit tube for molten glass.

16. The glass-producing apparatus according to Claim 14, wherein the flange forms an electrode for letting electricity pass through the platinum or platinum alloy structure to heat the structure.

17. The vacuum degassing apparatus according to Claim 15, wherein the flange forms an electrode for letting electricity pass through the platinum or platinum alloy structure to heat the structure.

18. A vacuum degassing apparatus employing the platinum or platinum alloy structure as defined in any one of Claims 1 to 13 as an uprising pipe and/or a downfalling pipe of the vacuum degassing apparatus.

## F i g. 1

F i g. 2

Fig. 3 (a)

Fig. 3 (e)

Fig. 3 (b)

Fig. 3 (f)

Fig. 3 (c)

Fig. 3 (g)

Fig. 3 (d)

# Fig. 4

# Fig. 5

F i g. 6

## Fig. 7

## Fig. 8

# F i g. 9

**EP 1 857 420 A1**

<div align="center">

**INTERNATIONAL SEARCH REPORT**

</div>

International application No.

PCT/JP2006/302078

| A. CLASSIFICATION OF SUBJECT MATTER |
|---|
| **C03B5/167**(2006.01), **C03B5/225**(2006.01) |

According to International Patent Classification (IPC) or to both national classification and IPC

| B. FIELDS SEARCHED |
|---|
| Minimum documentation searched (classification system followed by classification symbols) <br> C03B5/167, C03B5/225 |
| Documentation searched other than minimum documentation to the extent that such documents are included in the fields searched <br> Jitsuyo Shinan Koho    1922-1996    Jitsuyo Shinan Toroku Koho    1996-2006 <br> Kokai Jitsuyo Shinan Koho    1971-2006    Toroku Jitsuyo Shinan Koho    1994-2006 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| Y <br> A | JP 2002-87826 A (Corning Inc.), <br> 27 March, 2002 (27.03.02), <br> Par. Nos. [0001], [0016], [0022], [0025] to <br> [0027], [0032]; Figs. 1 to 4, 10 <br> & US 6286337 B1 | 1,2,7,10-18 <br> 3-6,8,9 |
| Y | JP 2001-171786 A (Ishibashitekku Kabushiki <br> Kaisha), <br> 26 June, 2001 (26.06.01), <br> Par. No. [0016]; Figs. 1, 4 <br> (Family: none) | 1,2,7,10-18 |
| A | JP 11-139834 A (Asahi Glass Co., Ltd.), <br> 25 May, 1999 (25.05.99), <br> Claims 1, 2; Figs. 1 to 3 <br> & US 6405564 B1 | 1-18 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search <br> 02 March, 2006 (02.03.06) | Date of mailing of the international search report <br> 14 March, 2006 (14.03.06) |
|---|---|
| Name and mailing address of the ISA/ <br>     Japanese Patent Office | Authorized officer |
| Facsimile No. | Telephone No. |

Form PCT/ISA/210 (second sheet) (April 2005)

**EP 1 857 420 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11139834 A

- JP 2005063835 A